# EUROPEAN PATENT SPECIFICATION

(11) **EP 2 294 845 B1**
(45) Date of publication and mention of the grant of the patent: **11.06.2014**
(21) Application number: 09742191.1
(22) Date of filing: 27.04.2009
(51) Int. Cl.: H04W 8/18, H04W 48/18, H04W 8/20

(54) **METHOD AND SYSTEM FOR DYNAMIC MANAGEMENT OF ACCESS SELECTION OF MOBILE EQUIPMENT**
VERFAHREN UND SYSTEM ZUR DYNAMISCHEN VERWALTUNG DER ZUGANGSAUSWAHL EINES MOBILEN GERÄTS
PROCÉDÉ ET SYSTÈME POUR LA GESTION DYNAMIQUE D UNE SÉLECTION D ACCÈS D UN ÉQUIPEMENT MOBILE

(30) Priority: 09.05.2008 SE 0801051
(43) Date of publication of application: 16.03.2011
(73) Proprietor: Giesecke & Devrient GmbH, 81677 München (DE)
(72) Inventor: FREESE, Esko, S-12650 Hägersten (SE); ERIKSSON, Alf, S-18330 Täby (SE)
(86) International application number: PCT/FI2009/050331
(87) International publication number: WO 2009/135991

(56) References cited:
- EP-A- 1 895 800
- WO-A-2005/117463
- US-A1- 2004 087 305
- US-A1- 2006 234 705
- US-A1- 2006 282 554
- 3GPP: "3rd Generation Partnership Project;Technical Specification Group Services and System Aspects;Architecture enhancements for non-3GPP accesses(Release 8)" 3GPP DRAFT; 23402-800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Sophia; 20080205, 13 December 2007 (2007-12-13), XP050282133

## Description

The invention is concerned with a method and system in mobile telecommunication networks for the dynamic management of mobile equipment selection between different Home Networks and/or different Access Technologies.

Mobile terminals using the Global System for Mobile Communication (GSM) and 3'rd Generation Partnership Program (3GPP) as standards for digital wireless communications are called GSM-3G phones. GSM-3G has many more services than just voice telephony over circuit switched channels. Additional services nowadays allow a great flexibility in where and when GSM-3G phones are used. Today's third-generation GSM-3G handsets deliver high quality and secure mobile voice, data and Messaging services over different Radio Access technologies (such as GSM, GSM Compact, and UMTS) over Public Land Mobile Networks (PLMNs), as well as same, corresponding or other types of services over other access technologies than PLMN radio.

In telecommunication, a Public Land Mobile Network (PLMN) is a network that is established and operated by an administration or by a Recognized Operating Agency (ROA) for the specific purpose of providing land mobile telecommunications services to the public. Access to PLMN services is achieved by means of an *air interface* involving radio communications between mobile phones or other wireless enabled user equipment and land based radio transmitters or radio base stations. PLMNs interconnect with other PLMNs and PSTNs for telephone communications or with internet service providers for data and internet access.

According to the GSM/3G specification 3GPP TS 23.122, a mobile station normally operates on its Home PLMN (HPLMN). A Visited PLMN (VPLMN) maybe selected e.g. in case of loss of radio coverage. The two existing modes for PLMN selection are the automatic mode, wherein a list of PLMNs is utilized in a priority order. In the manual mode, the mobile station indicates to a user, which PLMNs are available, for subscriber's manual selection.

Roaming management covers the tools and processes used to control the roaming behavior for the subscribers in a mobile telecommunications network. When a subscriber leaves his home network and receives service from another network, he is said to be roaming. When a mobile station receives services on a PLMN of a different country than that of the HPLMN it is question about international roaming. National roaming is the case, wherein the mobile station receives services form a PLMN of the same country as that of the HPLMN. The mobile station makes a periodic searches for the HPLMN or Higher Priority PLMN all the time, also while roaming nationally.

For normal service, the mobile station has to camp on a suitable cell, tune to the control channels of that cell an possible register within the PLMN so that the mobile station could receive information and messages from the PLMN and initiate call set up four outgoing calls or other actions from the mobile station. The choice of such a suitable cell is called normal camping. There are some requirements specified in this standard that a cell must satisfy before a mobile station can perform camping on it, like it has to be a cell of the selected LMN, it should not be barred or forbidden and should be subscribed by the mobile station. Selectable cells have different levels of priority.

The Subscriber Identity Module (SIM) inside handsets is a smart chip, originally designed to enable subscriber authentication and secure communication over the PLMN radio. Since that, there has been is an evolution of the SIM to USIM, being a standardized and secure application platform for GSM-3G, containing also a set of operator controlled files to steer subscribers handset to use right parameters and preferences of various kind. 3GPP (3^{rd} Generation Partnership Program) is a non-for-profit organization whose mission is to produce the telecommunications specifications for the third generation public mobile networks.

The 3GPP specification TS 31.102 describes the characteristics of the USIM application. The logical structure of files in USIM is hierarchical and there are three types of files, i. e. Elementary Files (EF), Dedicated Files (DF) and Master Files (MF), the last mentioned ones being highest in the hierarchy.

The applicable Elementary files for Home PLMN and Access Technology selection are EF_HPLMNwAcT (Home PLMN selector with Access technology), and EF_HPPLMN (Higher Priority PLMN search period). Other applicable standards-based files for access technology selection within this invention are EF_EPLMN, EF_OPLMNWLAN, EF_OWSIDL, EF_ARR and EF_NETPAR.

Additionally, specifications 3GPP TS 51.104 and TS 31.111 describe SIM Application Toolkit commands "REFRESH", of various levels. The purpose of these commands can be e.g. to make the terminal to re-read an updated Elementary File.

Dynamic Access Technology Management covers the tools and processes used to control the camping behavior of a Mobile Equipment in a mobile telecommunications network. When a subscriber resides under coverage of a PLMN that is to be treated as his home network and receives service from another network, he is said to be camping under HPLMN. A standards based handset will periodically make PLMN look-ups, to check availability for a higher priority Home Network and/or access technology.

As operators have implemented their own GSM and 3G radio coverage and capacity in different ways, there could be different, varying preferences to shift subscribers between the accesses, based on e.g. current production capacity, services being used, commercial agreements in cased of procured capacity from another operator, subscribers handset capabilities, etc.

However, the PLMN radio is and peoples movements and service use are all dynamic, unpredictable parameters, it might not be possible to have static settings on the USIM that ensure optimized radio camping (optimized production capacity, etc). Commercial production agreements, with pricing and target PLMN capacity volumes can also vary on time bases.

Hence, there are cost savings foreseen for a mobile operator when enabling a dynamic shift of subscribers between available home networks and access technologies.

Subscribers can also perceive a better Home PLMN service, if the handset would follow the access technology type that the handset is best suited for - alternatively based on services the subscriber use most.

Deployment of expensive features in the PLMN core and radio networks (called "Service Based Handover") can be avoided with help of dynamic access technology steering.

Dynamic HPLMN with Access Technology management is thus an important area for the operators to improve the total profitability. The management gives the operator improved control of what networks its subscriber's camp under, and which access technologies they prefer to use.

Thus, the term "roaming" is used for a mobile station when positioned and roaming outside its own PLMN (HPLMN). "Camping" generally, is a term when positioned under a certain PLMN access technology and when changing access technology, not only within a certain cell when changing call. It should be noted that a Third generation (3G) mobile station not only camps under a cell as a 3G station simultaneously can be attached to several cells.

In this text, the term camping thus generally means camping between different radio access networks, BSSs or UTRANs or any other alternatives, the handset has attached to. For example changing from a 2G network to a 3G network or to a WLAN network.

The Base Station Subsystem (BSS) is the section of a traditional cellular telephone network which is responsible for handling traffic and signaling between a mobile phone and the Network Switching Subsystem. The GSM network can be divided into three major parts, i.e. 1) the Mobile Station (MS) carried by the subscriber, 2) the Base Station Subsystem (BSS) controling the radio link with the Mobile Station, and 3) the Base Transceiver Station (BTS) forming a cell. Several BTS stations together are controlled by one Base Station Controller (BSC). The BTS 2 and BSC 3 together form the Base Station Subsystem (BSS).

UTRAN, short for UMTS Terrestrial Radio Access Network, is a collective term for the Node B's and Radio Network Controllers which make up the UMTS radio access network. This communications network, commonly referred to as 3G (for 3rd Generation Wireless Mobile Communication Technology), can carry many traffic types from real-time Circuit Switched to IP based Packet Switched. The UTRAN allows connectivity between the UE (user equipment) and the core network. The UTRAN contains the base stations, which are called node-B's, and Radio Network Controllers (RNC). The RNC provides control functionalities for one or more node-B's. A node-B and an RNC can be the same device, although typical implementations have a separate RNC located in a central office serving multiple node-B's. Despite the fact that they do not have to be physically separated, there is a logical interface between them known as the lub. The RNC and its corresponding node-B's are called the Radio Network Subsystem (RNS). There can be more than one RNS present in an UTRAN.

Node B is a term used in UMTS to denote the BTS (base transceiver station). In contrast with GSM base stations, Node B uses WCDMA as air transport technology. As in all cellular systems, such as UMTS and GSM, Node B contains radio frequency transmitter(s) and the receiver(s) used to communicate directly with the mobiles, which move freely around it. In this type of cellular networks the mobiles cannot communicate directly with each other but have to communicate with the BTSs.

Controlling the camping behavior becomes increasingly important if there is a great unpredictability in people's movements and service usage. E.g., local events such as exhibitions and concerts, potentially having a great number of visiting (roaming) subscribers from other networks, could require totally different camping preferences for operators subscribers.

The camping behavior is defined in the 3GPP specifications and is controlled by data that is stored on the (U)SIM ((UMTS) Subscriber Identity Module) card. The handset will modify its preferred camping behavior based on the contents of the roaming control files on the (U)SIM.

One such specification, in which the mechanisms that control camping behavior in the GSM/3G network are defined is 3GPP TS 23.122. According to that specification, the camping behavior is to a large extent controlled by the network selector files on the (U)SIM card of the mobile phone. One of the files is the so-called HPLMNwAcT (Home Public Land Mobile Network selector with Access Technology), and the other one is the HPPLMN (Higher Period PLMN search period).

When the phone shall select a network, it first looks for availability for a Home Network based on networks defined in the HPLMNwAcT. According to this specification, another file on the USIM, HPPLMN shall control how often the phone searches for an available higher preference network (or access technology).

Hence, the mobile handset will initiate such periodic searches, steered by the USIM data, and based on a higher priority network or access technology found, switch to it.

If a selected network with access technology becomes unavailable, the phone will try to make a network attach to a next preferred HPLMN and/or access technology in the priority order. All descriptions given assume that the phone performs network selection without user interaction.

When home network and access technology selection takes places without user interaction, the phone is said to be operating in automatic network selection mode. The HPLMN networks set by the operator cannot be overruled by trying to select a network by manual selection mode.

The most basic form of HPLMN Camping Management is to define the contents of the HPLMN control files, i.e. the HPLMNwAcT list and the periodic network search period, on the SIM cards at the time of manufacturing, personalization or by proactive batches by using Over-The-Air (OTA) provisioning technology. This is the common way, to make a static or semi-static definition of HPLMN and access technology preferences. The behavior of the static HPLMN and access technology management is non-intrusive for the subscriber.

This commonly used method may steer subscribers to a non-preferred HPLMN or access technology as it does not take into consideration the dynamics of a mobile network. Such dynamics as simplest could be, a local overload in the ordinarily preferred HPLMN/access, or an unexpected service usage by several subscribers.

Due to the above, obvious limitations of the static or semi-static camping management, a number of solutions for so-called dynamic HPLMN and access technology selection (dynamic access technology management) is presented.

In some of these solutions, Dynamic Access technology Management uses active knowledge regarding a subscriber's state, service usage or location, and tries to achieve a change in the current camping situation. In dynamic access technology management, the subscriber's home network operator knows when a subscriber is attached into a mobile network, and implicitly, what the network is. This information is available in the Home Location Register (HLR). Further down in operators own PLMN domain, if examining information exchanged over in lu- or A-interfaces, it can even be determined what access technology the subscriber is presently attached to.

If the subscriber is using GPRS based services, the operator may know that observing PDP-context activations or by observing subscriber's GPRS traffic passing the GGSN in the operator's network.

If a subscriber is using is the operator's own network, the operator also knows the production and fault status of the radio network. Similarly, the operator may knows which services the subscriber is actively using or is trying to use, based on probing various interfaces in the mobile network, or based on proprietary events submitted by certain service nodes.
In both cases, the operator usually has information about the handset the subscriber usually uses - based on registered IMEI/IMEISV code of the Mobile Equipment.

If a reason occurs to reduce the load in one PLMN radio network within an area, and a shift of production to another radio is preferred, a trigger is generated by the operator and sent to the camping management server.

In the dynamic camping management scenario, a special Camping Management Application (CMA) monitors events in the network, for example by interfacing to the signaling links of A- or lu- interfaces (Radio network-core network interfaces of PLMN), or specific radio capacity alarm interface of NMS (Network Management Subsystem).

CMA is steering the SIM-OTA platform by having an appropriate SIM-OTA provisioniong command interface to the SIM-OTA platform. CMA is not part of active service/traffic processing network, or path. CMA can receive events or other triggers and based on this data a command can be executed against the SIM-OTA platform, which send updates to actual (U)SIM card.

Similarly, an observed network event could be used by the camping management server, to execute a pre-defined business logic and determine that there is a reason to shift the subscriber to a more compatible HPLMN or access technology.

The business logics could also be a pre-programmed time-based schedule, to shift subscribers fulfilling certain criteria, from another HPLMN/access technology to another by dynamically changing the priorities.

All changes in access technologies for camping may also include a possibility to restore the default access, upon a certain criteria, such as time.

The camping management server takes update measures towards the subscriber's SIM to make the phone prioritize another home network or access technology. The dynamic camping management is not intrusive to the subscriber as of SIM-OTA updates shall not cause interruption in the PLMN ongoing services -if so preferred by the operator. Means could also be used to terminate a service and make the access technology/HPLMN change by brute force. Normally, such methods are however not to be used.

When the subscriber attaches to the mobile network, the CMA is typically notified. If the subscriber is camping under a less-preferred network, based on the defined business rules, attempts can be directly made to dynamically move him to a preferred HPLMN & Access technology. This behavior shall not lower the perceived quality of service for the subscriber.

Any subsequent events or triggers, even internal timer (scheduling) function, could be used as sources for execution of camping steering business logics resulting to moving of subscribers from networks to others.

In the case of dynamic camping management, the CMA attempts to update the HPLMNwAcT priority list and HPPLMN timer on the USIM. However, as-described-above, this itself does not make the phone switch networks.

Therefore, the CMA will attempt to apply additional measures to steer the phone to a new network. Such methods include different levels of the SAT REFRESH command specified in GSM 11.14/3GPP TS 51.104 possibly in conjunction with the Remote File Management (RFM) application in GSM 03.48/3GPP TS 23.048.

EP patent application 1 895 800 is concerned with determination of a list of preferred mobile access networks. A network selection manager determines such a list to which a mobile node might be attached during a network selection state. The list is determined in accordance with operator determined conditions, like load, congestion in the networks, changes in the list since last communication with the mobile node, etc.

WO publication 2005/117463 discloses managing multimode roaming mobile devices for roaming. An overlay function component is configured to evaluate data and select one of access technology based on selection parameters in a store. Another store holds data that relates to available access technologies. The roaming mobile devices have a radio interface for receiving said network data over a wireless channel.

US patent application 2004/0087305 discloses a system and apparatus for redirecting wireless network traffic. Embodiments include different redirecting solutions, such as determining when a roaming mobile station initiates a registration attempt with a non-preferred network and causing the mobile station to request a preferred network.

US patent application 2006/0282554 discloses a method for provisioning a multi-mode wireless terminal with a system priority list with information that identifies a plurality of wireless networks systems types. A wireless network is selected form the list based on manually or automatically specified priority.

US patent application 2006/0234705 presents a mobile station with a memory with information that includes an overlay function and overlay parameters to perform system selection whether to acquire a home system or a non-home system.

The 3GPP TS 23.402 V8.0.0 (2007-12) specification covers e.g. both roaming and non-roaming scenarios and covers all aspects, including mobility between 3GPP and non 3GPP accesses, policy control and charging, and authentication, related to the usage of non-3GPP accesses.

EP 1 895 800 discloses the preamble portion of the independent claims.

The object of the invention is therefore to develop a dynamic HPLMN and access technology management application, based on the present business-, production-, service- or handset compatibility reason(s).

This object is solved by the subject matter of the independent claims. The preferable embodiments of the invention are presented in the subclaims.

The present method manages mobile equipment that are camping in mobile telecommunication networks under a home network using an access technology. In the method, the camping behavior is steered by the contents of control files saved in the subscriber identification module (SIM) of the subscriber, read by the mobile equipment (ME). The method is mainly characterized in that a list of networks and access technologies are defined in controls file for the mobile equipment of a subscriber, to be used in a priority order in a camping situation.

The system comprises a standards-based mobile equipment and subscriber identity module having control files stored and having these files OTA-updateable, the contents of which determines the home network and access technology selection behavior by means of a list of networks and access technologies, to be used in a priority order in a camping situation under a home network coverage, and a camping management application with means for handling camping information taken place by the subscriber and means for updating the control files of the subscriber identification module on the basis of said information.

When a need to move a subscriber from one network and/or access technology to another arises, this need is defined and information about the need for moving the subscriber is sent to a camping management application.

The camping management application then checks the current camping preferences set for the subscriber in the home network and the desired camping behavior for the location that the subscriber is camping in. As a result of the comparison, the application adjusts the home network camping priorities to be in accordance with the desired camping behavior on that particular moment.

The system for the management of camping of mobile subscribers under a home network and certain access technology comprises a mobile subscriber equipment having control files stored, the contents of which decides the home network and access technology selection behavior by means of a list of networks and access technologies, to be used in a priority order in a camping situation under a home network coverage, and a camping management application with means for handling camping information taken place by the subscriber and means for updating the control files of the subscriber equipment on the basis of said information.

The method might comprise a further step of changing the time controlled network search period. In that case, the value of the time controlled network search period is raised if in the camping was made in accordance with the desired behavior for the location that the subscriber camped into but the value of the time controlled network search period is lowered if the camping was not made in accordance with the desired behavior for the location that the subscriber camped into.

When the camping management application CMA makes amendments in a file about desired behavouring, the mobile station reads the updated list before the change takes place. CMA can make the mobile station read updates and takes them in use e.g. by means of the standardized "SAT Refresh" command.

In a possible further step, the CMA might check if the phone support the correct camping behavior, based on the Mobile Equipments identity (IMEI/IMEISV), or a terminal capability register associating the IMEI with certain functional capabilities. The CMA might also check if the subscribers subscription includes certain services, and/or what the subscribers usage of these services has been in past.

The subscribers present location or location area under the PLMN can be checked by a separate procedure (e.g. by standards based positioning or by a proprietary method).

The CMA preferably applies SIM application Toolkit command REFRESH each time at SIM/USIM update, in order to enforce the SIM OTA update to take instant effect.

Furthermore, the CMA can get feedback about the subscribers changed camping from the Home Location Register (HLR), or from a probing system of SS7 domain of the mobile network, or from Network Management system of the mobile radio network or other mentioned sources from where the CMA gets information.

The CMA can furthermore restore the HPPLMN or other updated files to a default value. Thus, In the method of the invention, the camping behavior of a mobile terminal is based on settings in the form of contents of different control files saved in the mobile terminal of the subscribers. A first file contains a list of networks and access technologies to be used in a priority order in a camping situation under the home network coverage. A second file contains information about the period, regarding how often the handset should make a periodic look-up for a higher priority network/access technology. A third element used by the method is the use of commands telling the terminal, that control files on the cards have been modified.

The method starts with having some Home Public Land Mobile network (HPLMN) and access technology preferences on the SIM, according which the subscribers are camping in the networks. Upon a given event, a specific business logics gets executed and subscriber's HPLMN and/or access technology preferences on the SIM will be changed. Also, the HPPLMN timer value can be changed, potentially to a temporary value.

The updates on the SIM card can be enforced by some SIM Application Toolkit REFRESH command.

In the method, the subscriber is moved to another Home network or access technology. The moving takes place by saving changed second file information to be used in the moving and sending the information about said change to the mobile terminal. The network connection is then re-established by the mobile terminal by selecting the preferred network from said changed information.

Most of the telephones of today have both 2G (GSM) and 3G (W-CDMA) as coexisting alternatives, potentially with even other alternatives implemented in the handset (such as WLAN). The invention is intended for such mobile equipment that implement two or more co-existing, alternative access technologies.

The camping management application analyzes, decides and executes steering of mobile equipments (mobile subscriber's) access technology based on information residing in operators domain. The information residing in the operator domain and affecting to the camping management decision can be, but not limited to, the following types:
- Historical information about subscribers usage of services
- Agreement between subscriber and operator; subscribed services
- Current (realtime) information about network capacity utilization and known typical capacity patterns
- Error rates in the network
- Roaming information
- Service usage or service attempt information
- Access balancing preferences defined by the operator
- Subscriber specific preferences defined by the operator
- Time information

Based on these types information entities and any other information that may be applicable, the camping management application will create a conclusion and initiate a access technology steering. Semantically, the information may be constituted of an information source, a trigger information or combinations thereof.

In the following, the invention is described by means of some advantageous embodiments by means of figures. The invention is not restricted to the details of the embodiments.

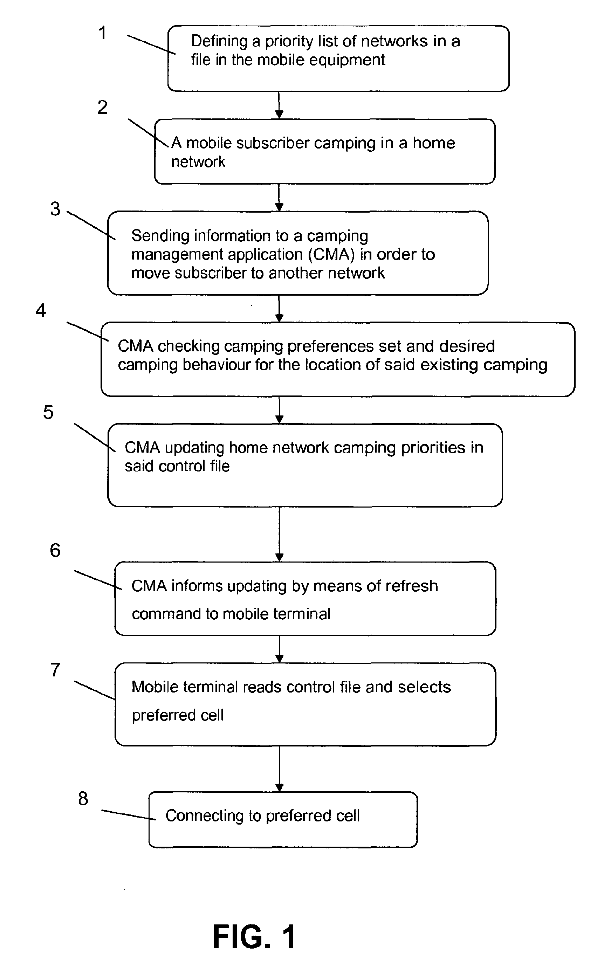

Figure 1 presents a flow scheme of an example of the method of the invention

Figure 1 presents an overall flow scheme of an example of the method of the invention. The method of the invention is concerned with management of camping mobile subscribers within a home network.

In the method, the camping behavior of a mobile station is based on settings in the form of contents of different control files saved in the mobile terminal of the subscribers. In step 1 of figure 1, a file is defined that contains a list of network cells and access technologies to be used in a priority order in a camping situation. Said files are in this example Elementary Files HPLMNwAcT and/or HPPLMN on the subscribers USIM/SIM card.

It is now assumed that a mobile subscriber is camping within a home network in step 2 of figure 1.

Based on known network production statuses, a pre-programmed business rules can move a subscriber to another access network, or to just use another access technology. The rules are defined in a camping management application (CMA) in step 3 of figure 1. The initiating event for business logics execution is preferably sent from a programmable timer/scheduler function.

Other events that can initate the execution of business logics are Subscriber status, service status or network production status. The events individually or combined together can drive the business logics execution.

Alternatives for such events are information is sent by the Home Location Register (HLR), by a probing system of SS7 domain of the mobile network, by a Network Management system of the mobile radio network, by a service node of home network implementing subscriber services, or by a business support system of the home network.

At execution of the business logics, relevant data may be considered as parameters impacting logics execution. Such data may be subscription type, subscribed services, handset capabilities based on IMEI, production status, received event information details and operators won production preferences at a time.

In step 4, the CMA checks the current camping checking the current camping preferences set for the subscriber in the home network and the desired camping behavior for the location that the subscriber is camping in.

As a result of this comparison, CMA adjusts, in step 5, the home network camping priorities to be in accordance with the desired camping behavior on that particular moment by updating the control file holding the priority list.

In step 6, CMA then informs the updating of the control file by means of a refresh command to the mobile station, such as updates the Elementary Files HPLMNwAcT and/or HPPLMN on the subscribers USIM/SIM, by a real-time Over-The-Air (OTA) provisioning.

In step 8, the mobile station then reads the updated file and selects the preferred access technology in the home network.

In step 9, the mobile station is connected to the preferred access network.

## Claims

1. A method in mobile telecommunication networks for the management of mobile terminals of mobile subscribers camping under a home network using an access technology, in which method the camping behavior is based on the contents of control files saved in the mobile terminals of the mobile subscribers, the control files being stored in the Subscriber Identity module of the mobile terminal,
a) defining (1) a list of networks and access technologies into a control file of the mobile terminal of a first subscriber to be used in a priority order in a camping situation,
b) defining a need to move a subscriber from one network and/or access technology to another,
c) sending (3) information about the need for moving to a camping management application,
d) the camping management application checking (4) current camping preferences set for the first subscriber in the home network and the desired camping behavior for the location that the first subscriber is camping in, and
e) as a result of a comparison, adjusting (5) the home network camping priorities to be in accordance with the desired camping behavior on that particular moment by updating the control file holding the priority list of networks and access technologies,
**characterized in that**
the camping management application monitors events in the network,
a Subscriber Identity module of the mobile terminal sends (3) the information about the need for moving to the camping management application and
the information is about the need to move the first subscriber.

2. The method of claim 1, **characterized in that** the camping behavior is controlled by selector files on the Subscriber Identity module, SIM/USIM, of the mobile terminal, one of the files being Higher Period PLMN search period, HPPLMN, which controls how often the mobile terminal searches for an available higher preference network or access technology, whereby the method further comprises the step of changing the time controlling the periodic Higher Priority network search period.

3. The method of claim 1, **characterized in that** the camping behaviour is based on contents of different control files saved in the mobile terminal, wherein one file contains information about the period, regarding how often the mobile terminal should make a periodic look-up for a higher priority network/access technology, whereby the value of the period is raised if in step b) the camping was made in accordance with the desired behavior for the location that the subscriber camped into.

4. The method of claim 1, **characterized in that** the camping behaviour is based on contents of different control files saved in the mobile terminal, wherein one file contains information about the period, regarding how often the mobile terminal should make a periodic look-up for a higher priority network/access technology, whereby the value of the period is lowered if in step b) the camping was not made in accordance with the desired behavior for the location that the subscriber camped into.

5. The method of claim 1, **characterized in that** one of the mobile telecommunication networks is a Global System for Mobile Communication, GSM, or Universal Mobile Telecommunications System, UMTS, network.

6. The method of claim 1, **characterized in that** the information in step c) is sent from an application on the SIM/USIM.

7. The method of claim 1, **characterized in that** the method further comprises the camping management application checking if the mobile terminal supports the correct camping behavior, based on the Mobile Equipments identity, or a terminal capability register associating the International Mobile Equipment Identity, IMEI, with certain functional capabilities.

8. The method of claim 1, **characterized in that** the method further comprises the camping management application checking if the subscribers subscription includes certain services, and/or what has the subscribers usage of these services been in the past.

9. The method of claim 1, **characterized in that** the terminal delivers services over Public Land Mobile Networks, PLMNs, the subscriber's present location or location area under the Public Land Mobile Network, PLMN, being checked by a separate procedure, e.g., by standards based positioning or by a proprietary method.

10. The method of claim 1, **characterized in that** the camping management application analyzes, decides and executes steering of mobile terminals access technology based on information residing in operator's domain.

11. The method of claim 1 and 5, **characterized in that** the method further comprises the camping management application making a decision to update the Elementary Files for Home Public Land Mobile Network selector with Access Technology, HPLMNwAcT, Higher Period PLMN search period, HPPLMN, Operator controlled PLMN selector for WLAN Access, OPLMNWLAN, Access Rule Reference, ARR, and/or Network Parameters, NETPAR, on the subscribers USIM/SIM, by a real-time Over-The-Air, OTA, provisioning.

12. The method of claim 11, **characterized in that** the camping management application applies SIM application Toolkit command REFRESH of preferred level each time at SIM/USIM update, in order to enforce the SIM OTA update to take instant effect.

13. The method of claim 11, **characterized in that** the camping management application can get feedback about the subscribers changed camping from sources according to claims 7 or 10.

14. The method of claim 11 and 12, **characterized in that** the camping management application can restore the Higher Period PLMN search period, HPPLMN, or other updated files to a default value, based on defineable rules.

15. A system in mobile telecommunication networks for the management of mobile terminals of mobile subscribers camping under a home network using an access technology, the system comprising:
a) a mobile terminal of a first subscriber having control files stored in and read from a Subscriber Identity Module in the mobile terminal, the contents of which decides the home network and access technology selection behavior by means of a list of networks and access technologies, to be used in a priority order in a camping situation under a home network coverage, and
b) a camping management application with
means for handling camping information of a subscriber, and
means for updating the contents of control files saved in the mobile terminals of the mobile subscribers on the basis of said information, the camping management application checking current camping preferences set for the first subscriber in the home network and the desired camping behavior for the location that the first subscriber is camping in upon receiving information about the need for moving the subscriber, and adjusting the home network camping priorities to be in accordance with the desired camping behavior on that particular moment, as a result of a comparison, by updating the control file holding the priority list of networks and access technologies, and
c) means for sending information about a need for moving a subscriber to the camping management application,
**characterized in that**
the camping management application further comprises means for monitoring events in the network,
the Subscriber Identity Module of the mobile terminal having the means for sending the information about the need for moving to the camping management application and
the information is about the need to move the first subscriber.

## Patentansprüche

1. Verfahren in Mobilkommunikationsnetzen zum Verwalten von Mobilendgeräten von Mobilteilnehmern, die unter einem Heimatnetz campen, unter Verwendung einer Zugriffstechnologie, wobei in dem Verfahren das Camping-Verhalten auf den Inhalten von Steuerdateien basiert, die in den Mobilendgeräten der Mobilteilnehmer gespeichert sind, wobei die Steuerdateien in dem Teilnehmeridentitätsmodul (SIM) des Mobilendgeräts gespeichert sind,
a) Definieren (1) einer Liste von Netzen und Zugriffstechnologien in eine Steuerdatei des Mobilendgeräts eines ersten Teilnehmers zur Verwendung in einer Prioritätsreihenfolge in einer Camping-Situation,
b) Definieren eines Bedürfnisses, einen Teilnehmer von einem Netz und/oder Zugriffstechnologie zu einem/einer anderen zu bewegen,
c) Senden (3) von Information über das Bedürfnis einer Bewegung an eine Camping-Verwaltungsanwendung,
d) Prüfen (4) der gegenwärtigen Camping-Präferenzen, die für den ersten Teilnehmer in dem Heimatnetz gesetzt sind, und des gewünschte Camping-Verhalten für den Ort, an dem der erste Teilnehmer campt, durch die Camping-Verwaltungsanwendung und
e) Einstellen (5) der Heimatnetz-Camping-Prioritäten als Ergebnis eines Vergleichs, so dass diese in Übereinstimmung mit dem gewünschten Camping-Verhalten zu diesem bestimmten Zeitpunkt sind, durch Aktualisieren der Steuerdatei, die die Prioritätsliste von Netzen und Zugriffstechnologien hält,
**dadurch gekennzeichnet, dass**
die Camping-Verwaltungsanwendung Ereignisse in dem Netz überwacht, ein Teilnehmeridentitätsmodul (SIM) des Mobilendgeräts die Information über das Bedürfnis einer Bewegung an die Camping-Verwaltungsanwendung sendet (3) und die Information das Bedürfnis, den ersten Teilnehmer zu bewegen, betrifft.

2. Verfahren nach Anspruch 1, **dadurch gekennzeichnet, dass** das Camping-Verhalten durch Wählerdateien auf dem Teilnehmeridentitätsmodul, SIM/USIM, des Mobilendgeräts gesteuert wird, wobei eine der Dateien Higher Period PLMN search period, HPPLMN, ist, die steuert, wie oft das Mobilendgerät nach einem verfügbaren Netz mit höherer Präferenz oder Zugriffstechnologie sucht, wobei das Verfahren weiterhin den Schritt des Wechselns der Zeit, die die periodische Higher Priority network search period steuert, umfasst.

3. Verfahren nach Anspruch 1, **dadurch gekennzeichnet, dass** das Camping-Verhalten auf Inhalten verschiedener Steuerdateien basiert, die in dem Mobilendgerät gespeichert sind, wobei eine Datei Information über die Zeitspanne betreffend wie oft das Mobilendgerät eine periodische Suche nach einem höher prioritärem Netz/Zugriffstechnologie machen sollte, enthält, wobei der Wert der Zeitspanne erhöht wird, wenn in Schritt b) das Camping in Übereinstimmung mit dem für den Ort, an dem der Teilnehmer gecampt hat, gewünschten Verhalten vorgenommen wurde.

4. Verfahren nach Anspruch 1, **dadurch gekennzeichnet, dass** das Camping-Verhalten auf Inhalten verschiedener Steuerdateien basiert, die in dem Mobilendgerät gespeichert sind, wobei eine Datei Informationen über die Zeitspanne, betreffend wie oft das Mobilendgerät eine periodische Suche nach einem höher prioritärem Netz/Zugriffstechnologie machen sollte, enthält, wobei der Wert der Zeitspanne erniedrigt wird, wenn in Schritt b) das Camping nicht in Übereinstimmung mit dem für den Ort, an dem der Teilnehmer gecampt hat, gewünschten Verhalten vorgenommen wurde.

5. Verfahren nach Anspruch 1, **dadurch gekennzeichnet, dass** eines der Mobilkommunikationsnetze ein globales System zur Mobilkommunikation Netz, GSM, oder universelles Mobilkommunikationssystem Netz, UMTS, ist.

6. Verfahren nach Anspruch 1, **dadurch gekennzeichnet, dass** in Schritt c) die die Information von einer Anwendung auf der SIM/USIM gesendet wird.

7. Verfahren nach Anspruch 1, **dadurch gekennzeichnet, dass** das Verfahren weiterhin umfasst, dass die Camping-Verwaltungsanwendung prüft, ob das Mobilendgerät das richtige Camping-Verhalten unterstützt, basierend auf der Mobilequipment-Identität oder einem Endgeräte-Fähigkeitsregister, das die internationale Mobilequipment-Identität, IMEI, mit bestimmten Funktionsfähigkeiten in Verbindung bringt.

8. Verfahren nach Anspruch 1, **dadurch gekennzeichnet, dass** das Verfahren weiterhin umfasst, dass die Camping-Verwaltungsanwendung prüft, ob das Teilnehmerabonnement bestimmte Dienste umfasst, und/oder was die Nutzung dieser Dienste durch den Teilnehmer in der Vergangenheit gewesen ist.

9. Verfahren nach Anspruch 1, **dadurch gekennzeichnet, dass** das Endgerät Dienste über öffentliche landgestützte Mobilfunknetze, PLMNs, liefert, wobei der gegenwärtige Ort oder Ortsbereich des Teilnehmers in dem öffentlichen landgestützten Mobilfunknetz, PLMN, durch ein separates Verfahren geprüft wird, z.B. durch standardbasierte Ortung oder durch ein proprietäres Verfahren.

10. Verfahren nach Anspruch 1, **dadurch gekennzeichnet, dass** die Camping-Verwaltungsanwendung basierend auf Information, die in der Domäne des Betreibers liegt, die Steuerung der Zugriffstechnologie der Mobilendgeräte analysiert, über diese entscheidet und diese ausführt.

11. Verfahren nach Ansprüchen 1 und 5, **dadurch gekennzeichnet, dass** das Verfahren weiterhin umfasst, dass die Camping-Verwaltungsanwendung eine Entscheidung trifft, die grundlegenden Dateien für Home Public Land Mobile Network selector with Access Technology, HPLMNwAcT, und/oder Higher Period PLMN search period, HPPLMN, und/oder Betreiber-gesteuerter-PLMN-Wähler zum WLAN-Zugriff, OPLMNWLAN, und/oder Access Rule Reference, ARR, und/oder Netzparameter, NETPAR, auf der USIM/SIM des Teilnehmers durch Echtzeit Bereitstellung über die Luft, OTA, zu aktualisieren.

12. Verfahren nach Anspruch 11, **dadurch gekennzeichnet, dass** die Camping-Verwaltungsanwendung bei jedem Aktualisieren der SIM/USIM den SIM-Application-Toolkit-Befehl REFRESH mit bevorzugtem Niveau anwendet, um zu erzwingen, dass die SIM-OTA-Aktualisierung sofort wirkt.

13. Verfahren nach Anspruch 11, **dadurch gekennzeichnet, dass** die Camping-Verwaltungsanwendung Rückinformation über das geänderte Camping des Teilnehmers aus Quellen gemäß den Ansprüchen 7 oder 10 erhalten kann.

14. Verfahren nach Anspruch 11 und 12, **dadurch gekennzeichnet, dass** die Camping-Verwaltungsanwendung basierend auf definierbaren Regeln die Higher Period PLMN search period, HPPLMN, oder andere aktualisierte Dateien auf einen Standardwert wiederherstellen kann.

15. System in Mobilkommunikationsnetzen zum Verwalten von Mobilendgeräten von Mobilteilnehmern, die unter einem Heimatnetz campen, unter Verwendung einer Zugriffstechnologie, wobei das System umfasst:
a) ein Mobilendgerät eines ersten Teilnehmers, mit auf einem Teilnehmeridentitätsmodul (SIM) in dem Mobilendgerät gespeicherten und davon ausgelesenen Steuerdateien, deren Inhalte das Heimatnetz- und Zugriffstechnologie-Auswahlverhalten entscheidet mittels einer Liste von Netzen und Zugriffstechnologien, die in einer Prioritätsreihenfolge in einer Camping-Situation bei einer Heimatnetzabdeckung zu verwenden sind, und
b) eine Camping-Verwaltungsanwendung mit
Mitteln zur Handhabung von Camping-Information eines Teilnehmers, und
Mitteln zum Aktualisieren der Inhalte der in den Mobilendgeräten der Mobilteilnehmer gespeicherten Steuerdateien basierend auf der Information, wobei die Camping-Verwaltungsanwendung gegenwärtige Camping-Präferenzen prüft, die für den ersten Teilnehmer in dem Heimatnetz gesetzt sind, und das gewünschte Camping-Verhaltens für den Ort prüft, an dem der erste Teilnehmer bei Empfang von Information über das Bedürfnis, den Teilnehmer zu bewegen, campt, und zum Einstellen der Heimatnetz-Camping-Prioritäten als Ergebnis eines Vergleichs, so dass diese in Übereinstimmung mit dem gewünschten Camping-Verhalten zu diesem bestimmten Zeitpunkt sind, durch Aktualisieren der Steuerdatei, die die Prioritätsliste von Netzen und Zugriffstechnologien hält, und
c) Mittel zum Senden vom Information über ein Bedürfnis, einen Teilnehmer zu bewegen, an die Camping-Verwaltungsanwendung,
**dadurch gekennzeichnet, dass**
die Camping-Verwaltungsanwendung weiterhin Mittel zur Überwachung von Ereignissen in dem Netz umfasst,
das Teilnehmeridentitätsmodul (SIM) des Mobilendgeräts die Mittel zum Senden der Information über das Bedürfnis einer Bewegung an die Camping-Verwaltungsanwendung besitzt, und
die Information ein Bedürfnis, den ersten Teilnehmer zu bewegen, betrifft.

## Revendications

1. Procédé, dans des réseaux de télécommunication mobile, destiné à la gestion de terminaux mobiles d'abonnés à la téléphonie mobile campant sous un réseau domestique, utilisant une technologie d'accès, procédé dans lequel le comportement de campement est basé sur les contenus de fichiers de contrôle sauvegardés dans les terminaux mobiles des abonnés à la téléphonie mobile, les fichiers de contrôle étant mémorisés dans le module d'identification d'abonné (Subscriber Identity Module) du terminal mobile,
a) définissant (1) une liste de réseaux et technologies d'accès dans un fichier de contrôle du terminal mobile d'un premier abonné devant être utilisés en ordre de priorité dans une situation de campement,
b) définissant un besoin de déplacer un abonné d'un réseau et/ou d'une technologie d'accès à l'autre,
c) envoyant (3) une information sur le besoin de déplacement à une application de gestion de campement ,
d) l'application de gestion de campement vérifiant (4) les préférences de campement actuelles fixées pour le premier abonné dans le réseau domestique et le comportement de campement désiré pour la localisation dans laquelle le premier abonné campe, et
e) en tant que résultat d'une comparaison, ajustant (5) les priorités de campement en réseau domestique de manière à ce qu'il soit en accord avec le comportement de campement désiré concernant ce moment particulier par mise à jour du fichier de contrôle renfermant la liste de priorité de réseaux et technologies d'accès,
**caractérisé en ce que**
l'application de gestion de campement surveille des événements dans le réseau, un module d'identification d'abonné du terminal mobile envoie (3) l'information sur le besoin de déplacement à l'application de gestion de campement et l'information concerne le besoin de déplacer le premier abonné.

2. Procédé selon la revendication 1, **caractérisé en ce que** le comportement de campement est contrôlé par des fichiers de sélection sur le module d'identification d'abonné, SIM/USIM, du terminal mobile, un des fichiers étant Higher Period PLMN search period , HTPLMN, lequel contrôle à quelle fréquence le terminal mobile recherche un réseau ou une technologie d'accès disponible à préférence plus élevée, ledit procédé comprenant en outre l'étape du changement de temps contrôlant la période de recherche périodique de réseau de priorité plus élevée.

3. Procédé selon la revendication 1, **caractérisé en ce que** le comportement de campement est basé sur des contenus de différents fichiers de contrôle sauvegardés dans le terminal mobile, dans lequel un fichier contient une information sur la période, concernant la fréquence à laquelle le terminal mobile devrait périodiquement chercher un réseau/une technologie d'accès de priorité plus élevée, par lequel la valeur de la période est augmentée si, à l'étape b), le campement était fait en accord avec le comportement désiré pour la localisation dans laquelle l'abonné campait.

4. Procédé selon la revendication 1, **caractérisé en ce que** le comportement de campement est basé sur des contenus de différents fichiers de contrôle sauvegardés dans le terminal mobile, dans lequel un fichier contient une information sur la période, concernant la fréquence à laquelle le terminal mobile devrait périodiquement chercher un réseau/une technologie d'accès de priorité plus élevée, par lequel la valeur de la période est abaissée si, à l'étape b), le campement n'était pas fait en accord avec le comportement désiré pour la localisation dans laquelle l'abonné campait.

5. Procédé selon la revendication 1, **caractérisé en ce qu'**un des réseaux de télécommunication mobile est un réseau de système global de communications mobiles, GSM, ou de système de télécommunications mobiles universel, UMTS.

6. Procédé selon la revendication 1, **caractérisé en ce que** l'information à l'étape c) est envoyée depuis une application sur la SIM/USIM.

7. Procédé selon la revendication 1, **caractérisé en ce que** le procédé comprend en outre l'application de gestion de campement vérifiant si le terminal mobile soutient le comportement correct de campement, basée sur l'identité des Equipements Mobiles, ou un registre de capacité de terminal associant l'identité internationale des Equipements Mobiles, IMEI, avec certaines capacités fonctionnelles.

8. Procédé selon la revendication 1, **caractérisé en ce que** le procédé comprend en outre l'application de gestion de campement vérifiant si l'abonnement de l'abonné inclut certains services, et/ou l'usage que l'abonné a fait de ces services dans le passé.

9. Procédé selon la revendication 1, **caractérisé en ce que** le terminal fournit des services par l'intermédiaire de réseaux mobiles terrestres publiques, PLMNs, la localisation ou zone de localisation actuelle de l'abonné au sein du réseau mobile terrestre publique, PLMN, étant vérifiée par un processus séparé, p. ex. par positionnement basé sur standards ou par procédé breveté.

10. Procédé selon la revendication 1, **caractérisé en ce que** l'application de gestion de campement analyse, décide et exécute la conduite de technologie d'accès de terminaux mobiles sur la base d'information résidant dans le domaine d'opérateurs.

11. Procédé selon la revendication 1 et 5, **caractérisé en ce que** le procédé comprend en outre l'application de gestion de campement prenant une décision pour mettre à jour les fichiers élémentaires pour sélecteur de réseau mobile terrestre publique domiciliaire avec technologie d'accès, HPLMNwAcT, Higher Period PLMN search period, HPPLMN, sélecteur de PLMN contrôlé par opérateur pour accès au réseau WLAN, OPLMNWLAN, référence de règle d'accès, ARR, et/ou paramètres réseau NETPAR, sur la carte USIM/SIM de l'abonné, par un provisionnement en temps réel Over-The-Air, OTA.

12. Procédé selon la revendication 11, **caractérisé en ce que** l'application de gestion de campement applique la SIM application toolkit command REFRESH de niveau préféré chaque fois à la mise à jour SIM/USIM, afin de forcer la mise à jour OTA SIM à prendre immédiatement effet.

13. Procédé selon la revendication 11, **caractérisé en ce que** l'application de gestion de campement peut obtenir un retour d'information sur le changement de campement de l'abonné de la part de sources selon les revendications 7 ou 10.

14. Procédé selon la revendication 11 et 12, **caractérisé en ce que** l'application de gestion de campement peut remettre la Higher Period PLMN search period, HPPLMN, ou autres fichiers mis à jour à une valeur par défaut, sur la base de règles définissables.

15. Système, dans des réseaux de télécommunication mobile, destiné à la gestion de terminaux mobiles d'abonnés à la téléphonie mobile campant sous un réseau domestique, utilisant une technologie d'accès, le système comprenant:
a) un terminal mobile d'un premier abonné ayant des fichiers de contrôle sauvegardés dans et lus par un module d'identification d'abonné (Subscriber Identity Module) dans le terminal mobile, dont le contenu décide du comportement de sélection du réseau domestique et de la technologie d'accès au moyen d'une liste de réseaux et technologies d'accès devant être utilisés en ordre de priorité dans une situation de campement sous une couverture de réseau domestique, et
b) une application de gestion de campement dotée de
moyens de traitement de l'information sur le campement de l'abonné, et moyens de mise à jour des contenus de fichiers de contrôle sauvegardés dans les terminaux mobiles des abonnés à la téléphonie mobile sur la base de ladite information, l'application de gestion de campement vérifiant les préférences de campement actuelles fixées pour le premier abonné dans le réseau domestique et le comportement de campement désiré pour la localisation dans laquelle le premier abonné campe, après réception de l'information sur le besoin de déplacer un abonné, et ajustant les priorités de campement du réseau domestique de manière à ce qu'il soit en accord avec le comportement de campement désiré concernant ce moment particulier, en tant que résultat d'une comparaison, par mise à jour du fichier de contrôle renfermant la liste de priorité de réseaux et technologies d'accès, et
moyens d'envoi d'information sur un besoin de déplacer un abonné à l'application de gestion de campement,
**caractérisé en ce que**
l'application de gestion de campement comprend en outre des moyens de surveiller des événements dans le réseau,
le module d'identification d'abonné du terminal mobile ayant les moyens d'envoyer l'information sur le besoin de déplacement à l'application de gestion de campement
et l'information concerne le besoin de déplacer le premier abonné.
